# EUROPÄISCHE PATENTSCHRIFT

(11) **EP 1 233 220 B1**
(45) Veröffentlichungstag und Bekanntmachung des Hinweises auf die Patenterteilung: **29.09.2004**
(21) Anmeldenummer: 02003591.1
(22) Anmeldetag: 15.02.2002
(51) Int. Cl.: F16K 31/06

(54) **Proportional-Wegemagnetventil**
Proportional solenoid valve
Soupape magnétique proportionnelle

(30) Priorität: 15.02.2001 DE 10107164
(43) Veröffentlichungstag der Anmeldung: 21.08.2002
(73) Patentinhaber: ETO MAGNETIC KG, 78333 STOCKACH (DE); KIRSTEIN GMBH TECHNISCHE SYSTEME, 86156 AUGSBURG (DE)
(72) Erfinder: Vincon, Peter, 78333 Stockach (DE); Kirstein, Gerhard, 86152 Augsburg (DE)
(74) Vertreter: Koch, Günther, Dipl.-Ing.

(56) Entgegenhaltungen:
- EP-A- 0 878 652
- DE-A- 4 221 757
- DE-A- 4 231 998
- US-A- 5 261 456
- PATENT ABSTRACTS OF JAPAN vol. 018, no. 418 (M-1650), 5. August 1994 (1994-08-05) & JP 06 123378 A (NISSIN KOGYO KK), 6. Mai 1994 (1994-05-06)

## Beschreibung

Die Erfindung betrifft ein Proportional-Wegemagnetventil, welches insbesondere zum Ansteuern der verschiedenen Kupplungen und Bremsen eines Automatikgetriebes geeignet ist. Um bei Pkw-Automatikgetrieben im Falle eines Defektes einen Notbetrieb aufrechtzuerhalten, wird im allgemeinen elektrisch ein definierter Gang geschaltet, z.B. der zweite Gang, wobei die Überbrückungskupplung ausgeschaltet ist. Bei Spezialgetrieben, z.B. für militärische Sonderfahrzeuge, sitzt im Getriebe ein sogenannter Notmagnet, der unabhängig von einer Überwachungeinheit immer bestromt ist. Tritt ein Fehler in der elektrischen Steuerung auf, wird dieser Magnet stromlos und das Getriebe schaltet in eine Neutralstellung um, und es kann dann über ein mechanisches Notschaltgetriebe direkt über Kolben und Schieber auf die Kupplungen oder Bremsen ohne Druckmodulation eingegriffen werden. Eine derartige Sicherheitseinrichtung einer elektrischen Steuer- oder Regeleinrichtung für ein Gangschaltgetriebe ist aus der DE 39 02 037 C1 bekannt.

Die Erfindung geht aus von einem Proportional-Wegemagnetventil der im Oberbegriff des Patentanspruchs 1 angegebenen Gattung. Ein derartiges Ventil ist in Fig. 1 der beiliegenden Zeichnung dargestellt. US 5261456A offenbart auch ein derartiges Ventil. Damit das Magnetventil raumsparend möglichst klein ausgebildet werden kann, müssen die statischen Druckkräfte, die auf die beiden Kolbenflächen des Kolbenschiebers wirken, ausgeglichen werden. Bei dem bekannten Wegeventil ist zu diesem Zweck eine äußere Druckausgleichsleitung vorgesehen, die über die beiden äußeren Anschlüsse des Ventils die äußeren Ventilkammern miteinander verbindet. Die in diesen äußeren Ventilkammern herrschenden Drücke wirken in entgegengesetzter Richtung auf die Kolbenflächen des Steuerkolbens, und durch den über die Ausgleichsleitung bewirkten Druckausgleich kann eine feinfühlige Verschiebung des Steuerkolbens proportional zum Erregerstrom des Elektromagneten durch dessen Anker vorgenommen werden. Wenn der Elektromagnet stromlos ist, dann drückt eine Rückholfeder den Steuerkolben in eine Stellung, in der der Verbraucheranschluß mit dem Ablaufanschluß verbunden und die Verbindung zwischen Zulaufanschluß und Verbraucheranschluß geschlossen ist. Mit steigendem Strom wird die Verbindung zwischen Verbraucheranschluß und Ablaufanschluß abgedrosselt, und bei einem vorbestimmten Erregerstrom, der etwa dem halben maximalen Strom entspricht, sind aufgrund der Überdeckung beide Flußpfade geschlossen. Wird der Strom weiter erhöht, so wird die Verbindung zwischen Zulaufanschluß und Verbraucheranschluß linear mit der Stromerhöhung vergrößert. Die maximale Öffnung ist dadurch gegeben, daß der Anker am Polboden anstößt.

Wenn bei einer Störung der Strom ausfällt, kehrt der Steuerkolben unter der Kraft der Rückstellfeder in seine Ausgangsstellung zurück.

Der Erfindung liegt die Aufgabe zugrunde, ein gattungsgemäßes Proportional-Wegemagnetventil derart auszubilden, daß bei einem Stromausfall eine Notfunktion wirksam werden kann, in der der Zulaufanschluß voll mit dem Verbraucheranschluß verbunden wird oder verbunden bleibt und die Rückstellfeder unwirksam ist.

Gelöst wird die gestellte Aufgabe durch die im Kennzeichnungsteil des Patentanspruchs 1 angegebenen Merkmale.

Durch die Erfindung wird erreicht, daß im Notfall dem weiteren Anschluß ein Druckmittel zugeführt wird, das den Steuerkolben schlagartig in seine Endstellung überführt, in der Zulaufanschluß und Verbraucheranschluß voll miteinander verbunden sind. Eine derartige Druckbeaufschlagung über den weiteren Anschluß war bei dem bekannten Ventil nicht möglich, weil über die Druckausgleichsleitung der Steuerdruck der entgegengesetzten Druckoberfläche des Steuerkolbens zugeführt würde, so daß dieser letztlich unter der Wirkung der Rückholfeder wieder in die Ausgangsstellung überführt würde. Eine derartige Notfunktion wäre bei dem bekannten Ventil nur möglich, wenn mit einem erhöhten Aufwand Absperrhähne oder Ventile vorgesehen würden, über die der weitere Anschluß bzw. die Überbrückungsleitung zu- oder abgeschaltet werden.

Der Erfindung liegt demgemäß die Erkenntnis zugrunde, daß unter Wegfall komplizierter und aufwendiger Absperrhähne oder Ventile der Steuerkolben im Notfall einem Druckmittel ausgesetzt werden kann, das ihn in eine Notstellung verschiebt, wenn es gelingt, die notwendigerweise vorhandene Druckausgleichsleitung unwirksam zu machen.

Über die erfindungsgemäß vorgesehene innere Überbrückungsleitung kann im Normalbetrieb ein Druckausgleich erfolgen, so daß eine feinfühlige Verschiebung des Steuerkolbens möglich wird. Im Notfall und/oder bei Stromausfall kann über den weiteren Anschluß der Steuerkolben schlagartig in seine Endstellung überführt werden, da sich infolge der Drosselstelle so schnell kein Gegendruck aufbauen kann und bei Anschlag in der Endstellung die innere Druckausgleichsleitung abgeschlossen ist. Der geringe Leckstrom über die Drosselstelle während der Schaltfunktion ist unbedeutend und beeinflußt diese Notfunktion nicht.

Bei voller Erregung des Elektromagneten wird die Endstellung des Steuerkolbens durch Anschlag des Ankers am Polboden bewirkt, und in dieser Stellung kann über die Innenbohrung des Steuerkolbens ständig ein Druckausgleich erfolgen. Erst im Falle einer Notfunktion wird der Steuerkolben in seine Endstellung überführt, in der durch Anschlag, beispielsweise an der Einstellschraube, diese Innenbohrung abgesperrt und damit ein Druckausgleich verhindert ist.

Das erfindungsgemäße Proportional-Wegemagnetventil kann beispielsweise bei.der Sicherheitseinrichtung gemäß der DE 39 02 037 C1 anstelle des Magnetventils 15 in der Schaltung gemäß der Zeichnung eingesetzt werden. Die Verwendung des erfindungsgemäßen Ventils ist jedoch nicht auf eine derartige Notfunktion beschränkt, sondern kann überall dort eingesetzt werden, wo vergleichbare Verhältnisse vorliegen oder eine zusätzliche pneumatische oder hydraulische Schaltfunktion gefordert wird.

Ausgestaltungen der Erfindung ergeben sich aus den Unteransprüchen.

Nachstehend wird ein Ausführungsbeispiel der Erfindung anhand der Zeichnung in Verbindung mit einem den Stand der Technik repräsentierenden Wegemagnetventil beschrieben. In der Zeichnung zeigen:
- Fig. 1: zeigt einen Axialschnitt eines den Stand der Technik repräsentierenden Proportional-Wegemagnetventils;
- Fig. 2: ist ein Axialschnitt eines erfindungsgemäß ausgebildeten Proportional-Wegemagnetventils;
- Fig. 3: zeigt ein Hydraulikschaltbild des in Fig. 2 dargestellten Proportional-Wegemagnetventils.

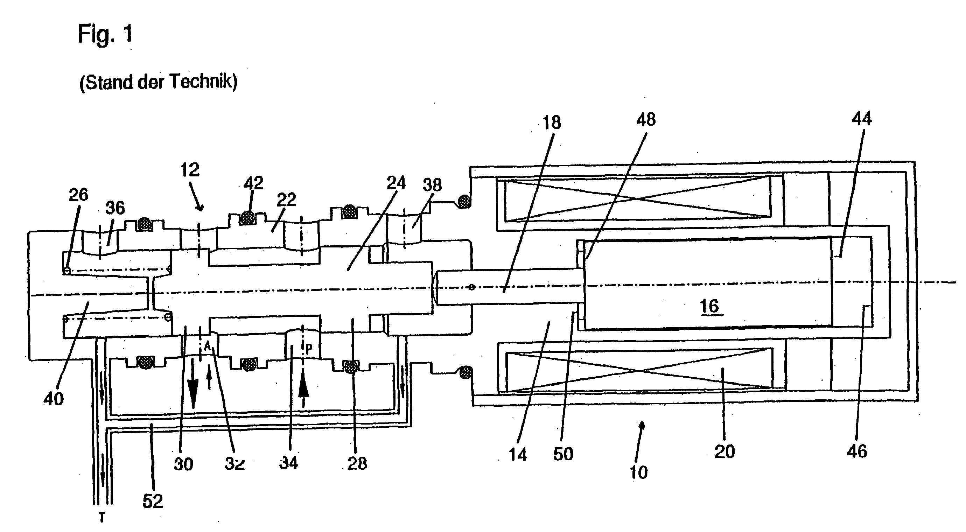

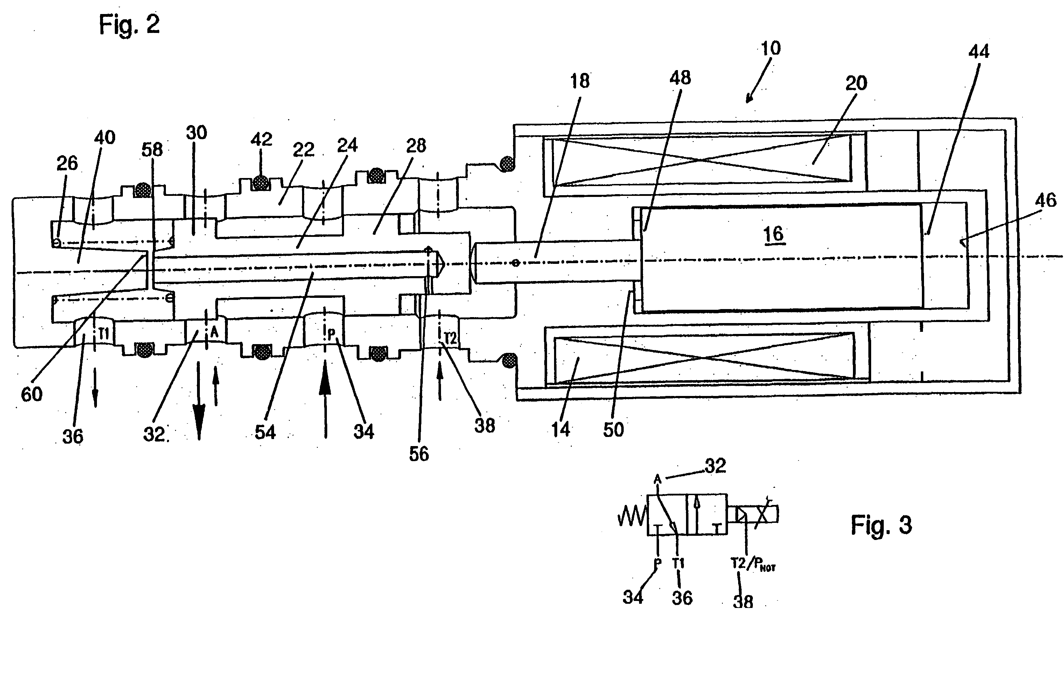

Der nachstehend erläuterte Grundaufbau ist beiden Magnetventilen gemäß Fig. 1 und 2 gleich:

Das Magnetventil weist einen Elektromagneten 10 und ein hiermit zusammengebautes Schieberventil 12 auf. Der Elektromagnet 10 besitzt ein den magnetischen Rückschluß bildendes Gehäuse 14, das den Anker 16 und die mit ihm verbundene Schubstange 18 in axialer Richtung verschiebbar führt. Umschlossen wird der Anker 16 in der aus der Zeichnung ersichtlichen Weise durch eine Erregerspule 20.

Das Schieberventil 12 weist ein mit dem Gehäuse 14 des Elektromagneten einstückig verbundenes Ventilgehäuse 22 auf, in dem ein Steuerkolben 24 verschiebbar ist, der unter der Wirkung einer Rückstellfeder 26 steht und von der Schubstange 18 des Ankers 16 bei Erregung entgegen der Kraft der Rückstellfeder 26 gemäß Fig. 1 und 2 nach links verschoben wird. Der Steuerkolben weist einen ersten Kolbensteg 28 und einen zweiten Kolbensteg 30 auf. Diese steuern in noch zu beschreibender Weise einen Zulaufanschluß 34 und einen Verbraucheranschluß 32 des Ventilgehäuses 22. Dieses weist außerdem einen Ablaufanschluß 36 und einen weiteren Anschluß 38 auf. Eine Einstellschraube 40 dient mit ihrem Ende als Anschlag für den Steuerkolben 24, und durch Einstellung der Schraube 40 ist die Endstellung des Steuerkolbens 24 einstellbar. In äußeren Ringnuten des Gehäuses 22 liegen O-Ringe, welche eine Abdichtung gegenüber einer nicht dargestellten, über das Gehäuse 22 aufschiebbaren Gehäusehülse bilden.

Wenn die Spule 20 des Elektromagneten 10 nicht erregt ist, wird über die Rückstellfeder 26 der Steuerkolben 24 und mit ihm über die Schubstange 18 der Anker 16 gemäß Fig. 1 und 2 nach rechts verschoben, bis die hintere Stirnringfläche 44 des Ankers 16 der Bodenfläche 46 des Gehäuses 14 anliegt. In dieser unerregten Stellung ist der Verbraucheranschluß 32 mit dem Ablaufanschluß 36 verbunden, während die Verbindung zwischen Zulaufanschluß 34 und Verbraucheranschluß 32 gesperrt ist. Bei Erregung des Elektromagneten wird dessen Anker 16 stromproportional verschoben, wodurch die Verbindung zwischen 32 und 36 gesperrt und die Verbindung zwischen 34 und 32 graduell geöffnet wird. Begrenzt wird die Verschiebebewegung bei dem Ventil gemäß Fig. 1 durch Anschlag des Steuerkolbens 24 an der Einstellschraube 40 und/oder durch Anschlag der vorderen Stirnringfläche 48 am Polboden 50.

Bei dem bekannten Ventil gemäß Fig. 1 ist der weitere Anschluß 38 mit dem Ablaufanschluß 36 über eine äußere Druckausgleichsleitung 52 verbunden. Dadurch werden die statischen Druckkräfte zwischen den beiden Anschlüssen 38, 36 ausgeglichen und ein Druckausgleich herbeigeführt, so daß die Verschiebung des Steuerkolbens 24 erfolgen kann, ohne daß auf ihm eine äußere Druckdifferenz lastet.

Bei dem erfindungsgemäßen Ventil gemäß Fig. 2 ist der Steuerkolben mit einer axialen Bohrung 54 versehen, die an dem der Einstellschraube 40 zugewandten Ende des Steuerkolbens 24 offen ist und im Bereich des weiteren Anschlusses 38 endet. In diesem Bereich ist die axiale Bohrung 54 relativ großen Durchmessers mit einer radial verlaufenden Drosselbohrung 56 mit dem Bereich des weiteren Anschlusses 38 verbunden. Hierdurch wird im Normalbetrieb ein Druckausgleich zwischen den Anschlüssen 38 und 36 bewirkt. Dadurch, daß der weitere Anschluß 38 frei ist, der beim Stand der Technik durch den Anschluß der Druckausgleichsleitung 52 besetzt ist, kann dieser Anschluß 38 eine weitere Steuerfunktion übernehmen. Im Normalbetrieb ist der weitere Anschluß 38 über ein externes Absperrelement verbunden, so daß sich über die Bohrungen 54, 56 ein Druckausgleich ergibt, welcher die beschriebene normale Arbeitsfunktion gewährleistet.

Die den Gegenstand der Erfindung bildende Notfunktion wird dadurch gewährleistet, daß durch das Öffnen des nicht dargestellten Absperrelementes über den Anschluß 38 ein Druck auf der gemäß Fig. 2 rechten Seite des Steuerkolbens 24 aufgebaut werden kann, der den Steuerkolben schlagartig nach links verschiebt und in dieser Notstellung die Anschlüsse 34 und 32 voll miteinander verbindet. Die Endstellung des Steuerkolbens 24 ist erreicht, wenn seine vordere Stirnringfläche 58 an der Stirnfläche 60 der Einstellschraube 40 anschlägt. In dieser Anschlagstellung ist die axiale Bohrung 54 durch die Stirnfläche 60 der Einstellschraube abgeschlossen, so daß kein Druckausgleich erfolgen kann und der Steuerkolben durch den im Notfall eingeführten Druck gegen die Wirkung der Rückstellfeder 26 in seiner "Notstellung" verbleibt. Wegen der Drosselstelle in der Drosselbohrung 56 kann der Druckausgleich über die axiale Bohrung 54 nicht schnell genug erfolgen, so daß der Steuerkolben 24 schlagartig verschoben wird und die axiale Bohrung 54 durch die Stirnfläche 60 abgedichtet ist, bevor ein Druckausgleich erfolgen kann.

Bei der erfindungsgemäßen Ausbildung des Magnetventils gemäß Fig. 2 wird die Bemessung und Einstellung derart vorgenommen, daß bei voller Erregung des Elektromagneten 10 die vordere Stirnringfläche 48 am Polboden 50 anstößt, bevor die Stirnringfläche 58 auf der dichtenden Stirnfläche 60 der Einstellschraube aufsitzt. Auf diese Weise wird gewährleistet, daß im Normalbetrieb ein Druckausgleich zwischen den Anschlüssen 36 und 38 gewährleistet ist.

### Bezugszeichenliste

- 10: Elektromagnet
- 12: Schieberventil
- 14: Gehäuse
- 16: Anker
- 18: Schubstange
- 20: Erregerspule
- 22: Ventilgehäuse
- 24: Steuerkolben
- 26: Rückstellfeder
- 28: 1.Kolbensteg
- 30: 2.Kolbensteg
- 32: Verbraucheranschluß
- 34: Zulaufanschluß
- 36: Ablaufanschluß
- 38: weiterer Anschluß
- 40: Einstellschraube
- 42: O-Ringe
- 44: Stirnringfläche
- 46: Bodenfläche
- 48: Stirnringfläche
- 50: Polboden
- 52: Druckausgleichsleitung
- 54: axiale Bohrung
- 56: Drosselbohrung
- 58: Stirnringfläche
- 60: Stirnfläche

## Patentansprüche

1. Proportional-Wegemagnetventil mit dem nachstehenden Aufbau:
- ein Steuerkolben (24) ist stromproportional durch den Anker (16) eines Elektromagneten (10) entgegen der Kraft einer Rückstellfeder (26) in einem Ventilgehäuse (22) verschiebbar;
- in einer ersten Stellung (Elektromagnet unerregt) sperrt der Steuerkolben (24) die Verbindung zwischen einem Zulaufanschluß (34) und einem Verbraucheranschluß (32) und hält die Verbindung zwischen dem Verbraucheranschluß (32) und einem Ablaufanschluß (36) offen;
- in einer zweiten Stellung (Elektromagnet voll erregt) sperrt der Steuerkolben (24) die Verbindung zwischen dem Verbraucheranschluß (32) und dem Ablaufanschluß (36) und hält die Verbindung zwischen dem Zulaufanschluß (34) und dem Verbraucheranschluß (32) offen;
- auf den Steuerkolben (24) wirkt einerseits der Druck in der Ventilkammer, die den Ablaufanschluß (36) aufweist und andererseits der Druck in der Ventilkammer, die einen weiteren Anschluß (38) aufweist;
- eine Druckausgleichsleitung (54, 56) verbindet den weiteren Anschluß (38) mit dem Ablaufanschluß (36);
**gekennzeichnet durch** die folgenden Merkmale:
- die Druckausgleichleitung (54) ist innerhalb des Steuerkolbens (24) ausgebildet und weist eine Drosselstelle (56) auf;
- der Steuerkolben (24) ist **durch** Druckbeaufschlagung der mit dem weiteren Anschluß (38) versehenen Ventilkammer über die zweite Stellung hinaus in eine Endstellung verschiebbar, in der bei geöffneter Verbindung zwischen Zulaufanschluß (34) und Verbraucheranschluß (32) die Druckausgleichsleitung (54) gesperrt ist.

2. Proportional-Wegemagnetventil nach Anspruch 1,
**dadurch gekennzeichnet, daß** die zweite Stellung des Steuerkolbens (24) durch einen Anschlag (48, 50) des Magnetankers bestimmt ist.

3. Proportional-Wegemagnetventil nach Anspruch 1,
**dadurch gekennzeichnet, daß** die Endstellung des Steuerkolbens (24) durch einen Anschlag (60) des Ventilgehäuses bestimmt ist.

4. Proportional-Wegemagnetventil nach Anspruch 1,
**dadurch gekennzeichnet, daß** die Druckausgleichsleitung eine einseitig nach der Ventilkammer mit dem Ablaufanschluß (36) offene axiale Sackbohrung (54) und eine radiale, die Drosselstelle bildende Bohrung (56) aufweist, die in der mit dem weiteren Anschluß (38) versehenen Ventilkammer mündet.

5. Proportional-Wegemagnetventil nach den Ansprüchen 1 bis 3,
**dadurch gekennzeichnet, daß** die die Bohrung (54) umschließende, offene Stirnringfläche (58) des Steuerkolbens (24) als Ventilkörper ausgebildet ist, der mit einem als Anschlag wirkenden Ventilsitz (60) zusammenwirkt, der im Ventilgehäuse (22) ausgebildet ist.

6. Proportional-Wegemagnetventil nach Anspruch 4,
**dadurch gekennzeichnet, daß** der Ventilsitz (60) von einer im Ventilgehäuse (22) axial verschiebbaren Einstellschraube (40) gebildet ist.

## Claims

1. A proportional directional control solenoid valve comprising the following structure:
- a control piston (24) is displaceable proportionally to current by the armature (16) of a solenoid (10) against the force of a return spring (26) in a valve housing (22);
- in a first position (solenoid unexcited) the control piston (24) closes the communication between a feed port (34) and a consumer port (32) and keeps the communication between the consumer port (32) and a discharge port (36) open;
- in a second position (solenoid fully excited) the control piston (24) closes the communication between the consumer port (32) and the discharge port (36) and keeps the communication between the feed port (34) and the consumer port (32) open;
- acting on the control piston (24) are on the one hand the pressure in the valve chamber which has the discharge port (36) and on the other hand the pressure in the valve chamber which has a further port (38);
- a pressure compensating duct (54, 56) connects the further port (38) to the discharge port (36);
**characterised by** the following features:
- the pressure compensating duct (54) is provided within the control piston (24) and has a throttle location (56); and
- the control piston (24) is displaceable by pressurisation of the valve chamber provided with the further port (38) beyond the second position into a limit position in which the pressure compensating duct (54) is closed when the communication between the feed port (34) and the consumer port (32) is opened.

2. A proportional directional control solenoid valve according to claim 1 **characterised in that** the second position of the control piston (24) is determined by an abutment (48, 50) of the solenoid armature.

3. A proportional directional control solenoid valve according to claim 1 **characterised in that** the limit position of the control piston (24) is determined by an abutment (60) of the valve housing.

4. A proportional directional control solenoid valve according to claim 1 **characterised in that** the pressure compensating duct has an axial blind bore (54) which is open at one end towards the valve chamber having the discharge port (36) and a radial bore (56) which forms the throttle location and which opens in the valve chamber provided with the further port (38).

5. A proportional directional control solenoid valve according to claims 1 to 3 **characterised in that** the open annular end face (58) of the control piston (24), which extends around the bore (54), is in the form of a valve body co-operating with a valve seat (60) which acts as an abutment and which is provided in the valve housing (22).

6. A proportional directional control solenoid valve according to claim 4 **characterised in that** the valve seat (60) is formed by an adjusting screw (40) which is displaceable axially in the valve housing (22).

## Revendications

1. Distributeur électromagnétique proportionnel possédant la structure ci-après :
- un piston de commande (24) peut être déplacé proportionnellement au courant par l'induit (16) d'un électroaimant (10) contre la force d'un ressort de rappel (26) dans un boîtier de distributeur (22) ;
- dans une première position (électroaimant non excité), le piston de commande (24) ferme la liaison entre un raccord d'entrée (34) et un raccord de consommateur (32) et maintient ouverte la liaison entre le raccord de consommateur (32) et un raccord de sortie (36) ;
- dans une deuxième position (électroaimant complètement excité), le piston de commande (24) ferme la liaison entre le raccord de consommateur (32) et le raccord de sortie (36) et maintient ouverte la liaison entre le raccord d'entrée (34) et le raccord de consommateur (32) ;
- sur le piston de commande (24) agit d'un côté la pression dans la chambre du distributeur qui présente le raccord de sortie (36) et de l'autre côté la pression dans la chambre du distributeur qui présente un autre raccord (38) ;
- une ligne de compensation de pression (54, 56) relie l'autre raccord (38) au raccord de sortie (36) ;
**caractérisé par le fait que**
- la ligne de compensation de pression (54) est formée à l'intérieur du piston de commande (24) et présente un point d'étranglement (56) ;
- le piston de commande (24) peut, par alimentation en pression de la chambre du distributeur munie de l'autre raccord (38), être déplacé au-delà de la deuxième position, dans une position finale dans laquelle la ligne de compensation de pression (54) est fermée, la liaison entre le raccord d'entrée (34) et le raccord de consommateur (32) étant ouverte.

2. Distributeur électromagnétique proportionnel selon la revendication 1,
**caractérisé par le fait que** la deuxième position du piston de commande (24) est déterminée par une butée (48, 50) de l'induit de l'aimant.

3. Distributeur électromagnétique proportionnel selon la revendication 1,
**caractérisé par le fait que** la position finale du piston de commande (24) est déterminée par une butée (60) du boîtier de distributeur.

4. Distributeur électromagnétique proportionnel selon la revendication 1,
**caractérisé par le fait que** la ligne de compensation de pression présente un trou borgne axial (54) ouvert d'un côté après la chambre du distributeur munie du raccord de sortie (36) et un trou radial (56) formant le point d'étranglement, qui débouche dans la chambre du distributeur munie de l'autre raccord (38).

5. Distributeur électromagnétique proportionnel selon l'une des revendications 1 à 3,
**caractérisé par le fait que** la surface annulaire frontale (58) ouverte du piston de commande (24), entourant le trou (54), est formée comme corps de soupape qui coopère avec un siège de soupape (60) formé dans le boîtier de distributeur (22).

6. Distributeur électromagnétique proportionnel selon la revendication 4,
**caractérisé par le fait que** le siège de soupape (60) est formé d'une vis de réglage (40) déplaçable axialement dans le boîtier de distributeur (22).
